Europäisches Patentamt

**European Patent Office**

**Office européen des brevets**

(19)

(11) Veröffentlichungsnummer: **0 091 085**
**B2**

(12)

# NEUE EUROPÄISCHE PATENTSCHRIFT

(45) Veröffentlichungstag der neuen Patentschrifft:
28.02.90

(21) Anmeldenummer: 83103145.5

(22) Anmeldetag: 30.03.83

(51) Int. Cl.⁵: **F 02 B 19/18**

(54) Dieselbrennkraftmaschine.

(30) Priorität: 06.04.82 DE 8209819 U

(43) Veröffentlichungstag der Anmeldung:
12.10.83 Patentblatt 83/41

(45) Bekanntmachung des Hinweises auf die Patenterteilung:
10.09.86 Patentblatt 86/37

(45) Bekanntmachung des Hinweises auf die Entscheidung über den Einspruch:
28.02.90 Patentblatt 90/09

(84) Bennante Vertragsstaaten:
DE FR GB IT SE

(56) Entgegenhaltungen:
DE-A-2 703 228
FR-A-1 344 892
US-A-3 963 003
US-A-4 300 381

Kraftfahrzeugtechnik, 5. Jahrgang, Heft 11, S.377-416

(73) Patentinhaber: Adam Opel Aktiengesellschaft
Bahnhofsplatz 1 Postfach 1560
D-6090 Rüsselsheim (DE)

(72) Erfinder: Grammes, Gerhard, Dipl.-Ing.
Naheweinstrasse 49
D-6553 Meddersheim (DE)

(74) Vertreter: Baumgarten, Jochem, Dipl.-Ing.
C/O Adam Opel Aktiengesellschaft Bahnhofsplatz 1
Postfach 1560
D-6090 Rüsselsheim (DE)

## Beschreibung

Die Erfindung betrifft eine Dieselbrennkraftmaschine mit einer außermittig im Zylinderkopf untergebrachten Wirbelkammer und einem im Wirbelkammerboden außermittig zum Kolben angeordneten Überströmkanal, der unter einem spitzen Winkel (Kanalwinkel) zur Trennebene zwischen Zylinderkopf und Zylinderblock gerichtet ist und einen linsenförmigen Querschnitt wie bei einer Plankonvex-Linse mit abgerundeten Ecken aufweist.

Bei einer aus der DE-A-2 703 228 bekannten Wirbelkammerausbildung dieser Art ist die untere, äußere Wandung des Überströmkanals konvex gewölbt, während die obere, zur Kolbenmitte hin gerichtete Wandung plan bzw. eben verläuft. Bei einem Kanalwinkel von 35° zur Trennebene zwischen Zylinderkopf und Zylinderblock beträgt der freie Kanalquerschnitt etwa 0,48 cm$^2$, was etwa 1/100 der Kolbenfläche entspricht. Mit diesen Konfigurationen sind die durch die bestehenden internationalen Bestimmungen über die Schwarzrauchemission (ECE R 24.02) oder das Motorgeräusch (EG 70/157) vorgegebenen Grenzen der Zulässigkeitswerte erreicht.

Die US-A-4 300 381 offenbart verschiedene Ausführungsformen des Wirbelkammerbodens und bezieht sich auf das Herstellungsverfahren für einen den Wirbelkammerboden bildenden Wirbelkammereinsatz, bei dem im Gesenkschmiedeverfahren zunächst in einem ersten Gesenk ein Rohling geschmiedet und in einem zweiten Gesenk die Konturen des Einsatzes vervollständigt werden bis hin zur Fertigstellung durch weitere spanende oder spanlose Bearbeitungsgänge mit Hilfe von Sonderwerkzeugen zum Einbringen des Überströmkanals. Ohne funktionelle Bezugnahme ist hierbei ein Kanalwinkel von 15° bis 75° zur Längsmittelachse des Einsatzes angegeben, während für den Kanalquerschnitt verschiedene Konfigurationen von oval bis kreisförmig mit jeweils einer abgeflachten Seite oder zwei parallel zueinander gerichteten flachen Seiten offenbart sind.

Durch die Erfindung sollen die Schwarzrauchemission verringert und eine Geräuschabsenkung erreicht werden.

Erfindungsgemäß wird diese Aufgabe mit einer Dieselbrennkraftmaschine der eingangs geschilderten Gattung dadurch gelöst, daß die obere zur Kolbenmitte gerichtete innere Überströmkanalwand konvex und die untere, äußere Kanalwand eben (plan) ausgebildet ist und daß der Überströmkanal eine Querschnittsfläche von etwa 1 % bis 0,70 % der Kolbenfläche und einen Kanalwinkel (α) von etwa 37° bis 44° aufweist. Vorteilhaft beträgt hierbei der Überströmkanalquerschnitt der Wirbelkammer etwa 0,39 cm$^2$ und der Kanalwinkel (α) etwa 40°.

Durch die Erfindung werden die Rauchgasemission und das Motorgeräusch erheblich vermindert. Allein die Rauchgasemission wird je nach Drehzahl etwa zwischen 75 % und 90 % gesenkt. Durch die günstigere Verbrennung wird auch eine Kraftstoffeinsparung von etwa 10 % erzielt. Insgesamt ergibt sich eine "weichere" Verbrennung (angenehmeres Geräusch) mit weniger unverbrannten Kohlenwasserstoffen und weniger Rußanteil im Abgas.

Die Erfindung ist anhand eines Ausführungsbeispieles in den Zeichnungen dargestellt und anschließend näher erläutert. Es zeigen:

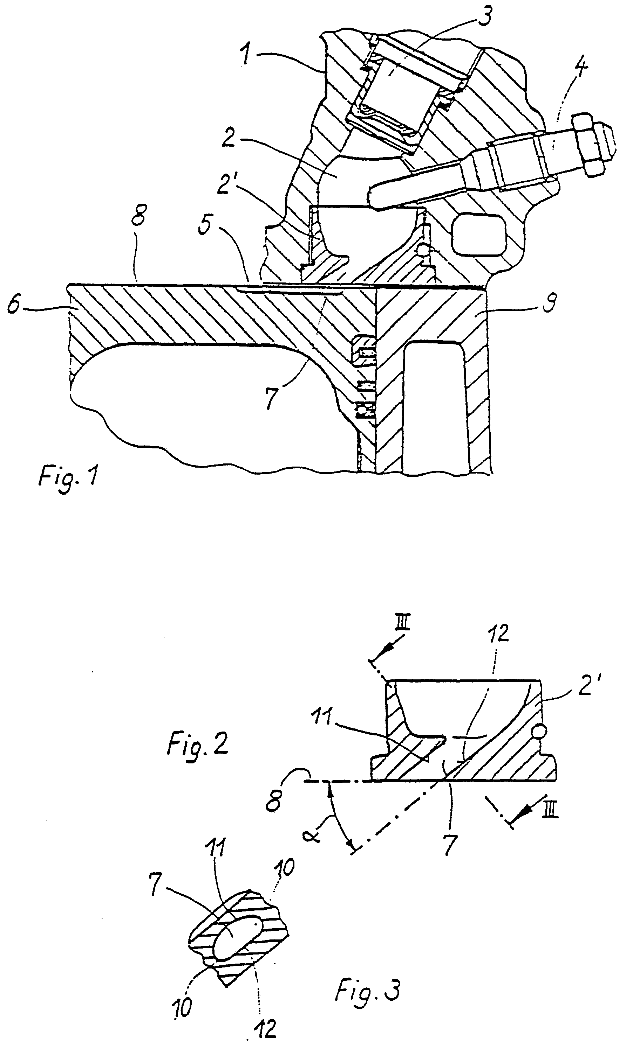

Fig. 1  einen Teilausschnitt des Zylinderblockes im oberen Zylinderbereich und des Zylinderkopfes im Bereich der Wirbelkammer im Längsschnitt,

Fig. 2  den Wirbelkammereinsatz im Längsschnitt und

Fig. 3  einen Schnitt durch den Überströmkanal des Wirbelkammereinsatzes nach Linie III - III in Fig. 2.

In dem Zylinderkopf 1 sind mit 2 die Wirbelkammer, mit 3 die Einspritzdüse und mit 4 die Glühkerze bezeichnet. Einen Teil der Wirbelkammer 2 bildet der Wirbelkammereinsatz 2' mit dem unter einem spitzen Winkel zu dem Hauptbrennraum 5 des Kolben 6 mündenden Überströmkanal 7. Der Einströmwinkel α, den der Überströmkanal 7 mit der Trennebene 8 zwischen Zylinderkopf 1 und Zylinderblock 9 bildet, beträgt 40°. Der Überströmkanal 7 hat die Querschnittsform einer plankonvexen Sammellinse mit abgerundeten Ecken 10. Hierbei bildet die konvex ausgebildete Fläche 11 die obere, zur Kolbenmitte hin gerichtete Innenwand und die mit 12 bezeichnete ebene Fläche die untere, äußere Wand des Überströmkanals 7. Bei einem Länge- zu Breite-Verhältnis dieses Kanalquerschnitts von etwa 2 : 1 ergibt sich eine Querschnittsfläche vom etwa 0,39 cm$^2$. Die gemessene Rauchgasemission bei einer Drehzahl von 3 000 UPM lag bei 0,8 und bei der Nenndrehzahl von 4 600 UPM bei 0,4 nach der ECE Richtlinie und damit wesentlich unter den dort angegebenen Grenzwerten.

## Patentansprüche

1. Dieselbrennkraftmaschine mit einer außermittig im Zylinderkopf (1) untergebrachten Wirbelkammer (2) und einem im Wirbelkammerboden außermittig zum Kolben (6) angebrachten Überströmkanal (7), der unter einem spitzen Winkel (Kanalwinkel α) zur Trennebene zwischen Zylinderkopf (1) und Zylinderblock (9) gerichtet ist und einen linsenförmigen Querschnitt wie bei einer Plankonvex-Linse mit abgerundeten Ecken aufweist, *dadurch gekennzeichnet*, daß die obere zur Kolbenmitte gerichtete innere Überströmkanalwand (11) konvex und die untere, äußere Kanalwand (12) eben (plan) ausgebildet ist und daß der Überströmkanal (7) eine Querschnittsfläche von etwa 1 % bis 0,70 % der Kolbenfläche (6) und einen Kanalwinkel (α) von etwa 37° bis 44° aufweist.

2. Dieselbrennkraftmaschine nach Anspruch 1, dadurch gekennzeichnet daß der Überströmkanalquerschnitt der Wirbelkammer (7) etwa 0,39 $cm^2$ und der Kanalwinkel ($\alpha$) etwa 40° beträgt.

## Claims

1. Diesel internal combustion engine with a swirl chamber (2) arranged off-centre in the cylinder head (1), and an overflow channel (7), disposed in the bottom of the swirl chamber offcentre to the piston (6), which is directed at an acute angle (channel angle) to the dividing plane between cylinder head (1) and cylinder block (9) and which has a lense-shaped cross-section, as in a plano-convex lens with rounded corners, *characterised* in that the upper, inner wall (11) of the overflow channel directed towards the centre of the piston is convex and the lower, outer channel wall (12) is flat (planar), and that the overflow channel (7) has a cross-sectional area of approximately 1 % to 0, 70 % of the piston area (6) and a channel angle ($\alpha$) of approximately 37 degrees to 44 degrees.

2. Diesel internal combustion engine according to claim 1, characterised in that the overflow channel cross-section of the swirl chamber (7) is approximately 0,39 $cm^2$ and the channel angle ($\alpha$) is approximately 40 degrees.

## Revendications

1. Moteur diesel comprenant une chambre de tourbillonnement (2) disposée en position excentrée dans la culasse (1) et un canal de transfert (7) qui, placé dans le fond de la chambre de tourbillonnement en position excentrée par rapport au piston (6), est orienté sous un angle aigu (angle de canal $\alpha$) par rapport au plan de séparation entre la culasse (1) et le bloc-cylindre (9) et présente une section transversale en forme de lentille, comme dans une lentille plane-convexe à angles arrondis, *caractérisé* par le fait que la paroi interne supérieure (11), dirigée vers le milieu du piston, du canal de transfert est réalisée convexe et la paroi externe inférieure (12) du canal est réalisée plane et que le canal de transfert (7) présente une surface de section transversale d'environ 1 % à 0,70 % de la surface (6) du piston et un angle de canal ($\alpha$) d'environ 37° à 44°.

2. Moteur diesel selon la revendication 1, *caractérisé* par le fait que la section transversale du canal de transfert (7) de la chambre de tourbillonnement est d'environ 0,39 $cm^2$ et l'angle de canal ($\alpha$) d'environ 40°.

EP 0 091 085 B2

Fig. 1

Fig. 2

Fig. 3